Europäisches Patentamt

European Patent Office

Office européen des brevets

(19)

(11) Veröffentlichungsnummer : **0 323 984 B1**

(12) ## EUROPÄISCHE PATENTSCHRIFT

(45) Veröffentlichungstag der Patentschrift :
10.07.91 Patentblatt 91/28

(51) Int. Cl.⁵ : **F02M 45/00, F02M 59/36**

(21) Anmeldenummer : **88904921.9**

(22) Anmeldetag : **11.06.88**

(86) Internationale Anmeldenummer :
**PCT/DE88/00350**

(87) Internationale Veröffentlichungsnummer :
**WO 89/00242 12.01.89 Gazette 89/02**

(54) **KRAFTSTOFFEINSPRITZANLAGE FÜR BRENNKRAFTMASCHINEN.**

(30) Priorität : **06.07.87 DE 3722264**

(43) Veröffentlichungstag der Anmeldung :
**19.07.89 Patentblatt 89/29**

(45) Bekanntmachung des Hinweises auf die
Patenterteilung :
**10.07.91 Patentblatt 91/28**

(84) Benannte Vertragsstaaten :
**DE FR GB IT**

(56) Entgegenhaltungen :
**DE-C- 3 147 467**
**FR-A- 2 299 523**
**GB-A- 2 141 787**

(73) Patentinhaber : **ROBERT BOSCH GMBH**
**Postfach 50**
**W-7000 Stuttgart 1 (DE)**

(72) Erfinder : **ECKERT, Konrad**
**Günzelburgweg 29**
**W-7000 Stuttgart 30 (DE)**

## Beschreibung

Stand der Technik

Die Erfindung geht aus von einer Kraftstoffeinspritzanlage für Brennkraftmaschinen nach der Gattung des Patentanspruchs 1.

Bei einer solchen behannten Kraftstoffeinspritzanlage gemäß FR-A-2 299 523, ist als erstes Auf/Zu-Steuerventil ein durch einen Regler zur Mengenverstellung betätigbarer Ringschieber auf dem Pumpen Kolben verschiebbar und als zweites Auf/Zu-Steuerventil ein Magnetventil vorgesehen, das eine Entnahme drossel in dem zweiten Entlastungs kanal steuert. Das Magnetventil dient dazu im Leerlaufbetrieb die Drossel zur Kraftstoffentnahme beim Pumpenförder hub freizugeben. Damit erfolgt eine Verlängerung der Einsprikdauer, wobei die Entnahmemenge über den Regler kompensiert wird.

Bei einer weiteren bekannten Kraftstoffeinspritzanlage (DE-OS 29 42 010) ist in dem ersten Entlastungskanal als Auf/Zu-Steuereinrichtung ein Magnetventil angeordnet und es ist im zweiten Entlastungskanal eine Steuerdrossel vorhanden, deren Querschnitt durch einen Stellmotor änderbar ist, wobei die Steuerdrossel in der Art mit dem elektronischen Steuergerät zusammenwirkt, daß der Stellmotor vom elektronischen Steuergerät angesteuert wird. Während durch das Magnetventil der Förderanfang und das Förderende bestimmt wird, indem dieses den ersten Entlastungskanal sperrt oder wieder aufsteuert, was grundsätzlich aber auch durch andere Mittel, beispielsweise eine mechanische Auf/Zu-Steuerung erfolgen kann, wird durch die verstellbare Drossel die Steuerung einer zusätzlichen Abströmmenge bis hinunter zur Menge 0 vorgenommen, wobei auch dann noch eine Abströmmenge fließen kann, wenn das Magnetventil geschlossen ist und die Einspritzung stattfindet. Es handelt sich bei dieser bekannten Anlage um eine spezielle Ausgestaltung eines in vielfältiger Weise bekannten Verfahrens zur Erzielung eines Leiselaufs des Motors, indem die Spritzdauer verlängert wird. Durch das Abströmenlassen einer Teilmenge während des Einspritzvorgangs wird diese Abströmmenge durch eine entsprechende Verlängerung der Einspritzdauer ausgeglichen, wofür der für die Einspritzung erforderliche effektive Hubabschnitt des Pumpenkolbens vergrößert wird. Die Tatsache, daß eine Verbesserung des Leiselaufs besonders bei niederen Drehzahlen des Motors angestrebt ist, kommt dieser Art zeitlicher Steuerung entgegen. Die Kraftstoffmengensteuerung zur Aufrechterhaltung der Drehzahl wird hier jedoch über die Motordrehzahl als Regelgröße bestimmt, was sich in der Einspritzdauer äussert, während der Steuerdrosselquerschnitt durch Vorgabe entsprechend einer vorgesehenen Leiselaufwirkung bestimmt wird. Bei dieser bekannten Kraftstoffeinspritzanlage wird also diese durch die verstellbare Drossel bewirkte "Störung" des an sich durch das Magnetventil gesteuerten und durch das elektronische Steuergerät bestimmten Einspritzgesetzes eliminiert, indem durch das elektronische Steuergerät gesteuert, der Schließ- bzw. Öffnungszeitpunkt des Magnetventils geändert wird, so daß die durch die verstellbare Drossel je nach Drosselstellung unterschiedliche Abströmmenge (Störgröße) ausgeglichen wird. Insoweit handelt es sich um eine Kraftstoffmengenregelung mit der Drehzahl als Regelgröße. Eine solche Regelung hat jedoch den Nachteil, daß sie verhältnismäßig träge ist, da über den Ist-SollWertvergleich innerhalb des elektronischen Steuergerätes zuerst die Einspritzmenge geändert wird, bevor durch eine neuerliche Messung eine weitere Korrektur möglich ist. Tatsächlich handelt es sich jedoch nur um die zu kompensierende über die Entlastungskanäle abströmende "Störgrößenmenge".

Es wäre natürlich auch möglich, die Rücklaufmenge aus der jeweiligen Stellgröße des die verstellbare Drossel betätigenden Stellmotors herzuleiten. Bei einer solchen auf Basis von Rückmeldegrößen des Stellmotors erfolgende, im elektronischen Steuergerät durchgeführte Kompensationsrechnung handelt es sich jedoch um komplizierte mathematische Funktionen, da der Stellweg des Stellmotors einen entsprechend komplizierten Zusammenhang zu der die Drossel durchströmenden Rücklaufmenge aufweist, welche ja tatsächlich herausgerechnet werden müßte. Es handelt sich hierbei um Funktionen höheren Grades, da durch die Drosselquerschnittsänderung auch Druckänderungen auftreten und dies in Verbindung mit den dynamischen Verhältnissen bei Einspritzvorgängen.

Diesem Problem ist in einer anderen bekannten Einspritzanlage (DE-PS 31 47 467) zum Teil dadurch begegnet worden, daß in zwei Entlastungskanälen je ein Magnetventil angeordnet ist und stromauf des einen Magnetventils eine konstante Drossel vorhanden ist, allerdings mit der Einschränkung, daß es sich um Entlastungskanäle der Einspritzdüse selbst handelt. Dies führt nachteiligerweise dazu, daß für jede Einspritzdüse eine separate solche Vorrichtung mit elektronischem Steuergerät erforderlich ist, wobei allerdings infolge der konstanten Drossel beim Störmengenausgleich nur noch die quadratische Funktion zwischen Druck und Menge einer Strömungsdrossel vom elektronischen Steuergerät verarbeitet werden muß. Um mit einer solchen Regelung arbeiten zu können, muß dann aber an jeder Einspritzdüse der Spritzbeginn durch einen extra Geber gemessen werden, was einen zusätzlichen Aufwand und eine Verkomplizierung der Anlage in anderer Richtung zur Folge hat.

Natürlich sind durch diese komplizierten Regelungsvorgänge auch hier nicht genannte typische Einspritzsteuervorgänge belastet, wie beispielsweise die der Drehzahl und Last angepasste Verstellung des Einspritzbeginns oder die insbesondere drehzahl- und/oder lastabhängige Angleichung der Einspritzmenge.

Vorteile der Erfindung

Die erfindungsgemäße Kraftstoffeinspritzanlage mit den kennzeichnenden Merkmalen des Anspruches 1 hat demgegenüber den Vorteil, daß mit Hilfe des Differenzdruckmessers und der Steuerdrossel in einfacher Weise, schnell sicher und genau die Rücklaufmenge des Kraftstoffes bei geöffnetem zweiten Steuerventil erfaßt werden kann und eine schnelle Korrektur der Steuerung des ersten Steuerventils unabhängig von dem dieses nach Betriebsparametern steuernden Steuergeräts. Damit kann vorteilhaft ein leiser Lauf der Brennkraftmaschine bei exakter Mengensteuerung erzielt werden.

Die stets konstante Fördermenge pro Zyklus der Hochdruckpumpe in Verbindung mit der sich ändernden Drehzahl und der darin enthaltenen Zeit stellt, bei der Mengensteuerung einer solchen Kraftstoffeinspritzanlage eine einfache Kenngröße dar, die vom elektronischen Steuergerät genutzt wird. Aufgrund des konstanten Querschnittes der Steuerdrossel besteht eine nur quadratische und vom elektronischen Rechner des Steuergerätes gut beherrschbare Funktion zwischen dem durch die Drossel erzeugten Differenzdruck und der durch diese Drossel strömenden Rücklaufmenge, so daß bei Ermittlung des Druckes auch unmittelbar die Rücklaufmenge ermittelt ist, das heißt, daß dem ermittelten Wert des Druckes direkt ein Mengenwert entspricht, der wiederum gleich der "Störgrößenmenge" ist.

Diese Verwendung des zweiten Auf/Zu-Steuerventils im zweiten Entlastungskanal hat zudem regeltechnisch den Vorteil, daß die Steuerdrossel nur "zeitlich" als Störgröße zugeschaltet wird, wobei dieser Zeitwert im elektronischen Steuergerät unmittelbar mit dem Zeitabschnitt vergleichbar ist, der durch den Schließ- bzw. Öffnungszeitpunkt des ersten Entlastungskanals durch das dort vorhandene erste Auf/Zu-Steuerventil bestimmt wird. Da in einem elektronischen Steuergerät außerdem eine Reihe anderer Kenngrößen zu verarbeiten ist, wie beispielsweise die Temperatur, wird bei der erfinderischen Kraftstoffeinspritzanlage aufgrund einer Linearisierung der Funktionen und vor allem der Vergleichbarkeit der Regelgrößen mit einfachen Mitteln eine exakte Einspritzmengenbestimmung bzw. Drehzahlregelung erreicht.

Es ist zwar bekannt (GB-A-21 41 787), über ein Magnetventil Förderanfang und Förderende einer Kraftstoffeinspritzpumpe zu steuern, wobei die Rücklaufmenge dadurch gemessen wird, daß sie in einem von einem Ausweichglied begrenzten Speicher gefördert wird und der Ausweichweg des Ausweichgliedes als Rücklaufmenge gewertet wird. Nachteilig bei dieser Ausgestaltung ist es, daß der Druck im Speicher und damit das gespeicherte Kraftstoffvolumen mit zunehmendem Ausweichweg zunimmt und der Ausweichweg somit nicht mehr linear mit der Rücklaufmenge zusammenhängt. Ferner kann es beim Absteuern der Rücklaufmenge zu Schwingungen des Ausweichgliedes kommen, und damit zu ungenauen Meßergebnissen. Nachteilig ist es ferner, daß eine aufwendige Steuerung für die Entlastung des Speichers zwischen den einzelnen Förderhüben vorgesehen sein muß, die ein schnelles und sicheres Entlasten gewährleistet, da sonst der Speicher überladen und dabei zerstört würde und da andererseits das Meßergebnis auf diese Weise verfälscht würde. Abgesehen davon dient die bekannte Kraftstoffeinspritzanlage dazu, die Einspritzmenge generell zu regeln, nicht aber dazu, die Laufgeräusche einer Brennkraftmaschine bei Niedriglast und Leerlauf zu senken.

Weitere Vorteile und vorteilhafte Ausgestaltungen der Erfindung sind der nachfolgenden Beschreibung, der Zeichnung und den Ansprüchen entnehmbar.

Zeichnung

Ein Ausführungsbeispiel des Gegenstandes der Erfindung ist in der Zeichnung stark vereinfacht dargestellt und im folgenden näher beschrieben. Es zeigen Fig. 1 eine Kraftstoffeinspritzpumpe im Vertikallängsschnitt, Fig. 2 und 3 Varianten des zweiten Auf/Zu-Steuerventils in Verbindung mit dem Mengenmesser, Fig. 4 und 5 zwei verschiedene Mengenmesser, Fig. 6 einen Schaltplan des Ausführungsbeispiels mit elektronischem Steuergerät und Fig. 7 eine Variante dieses Schaltplans.

Beschreibung des Ausführungsbeispiels

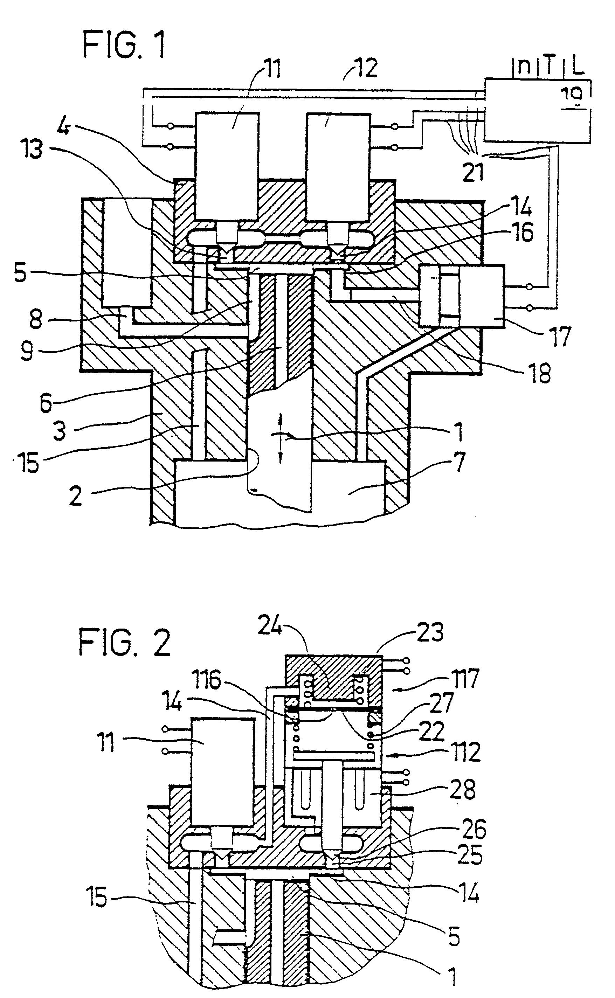

Als Einspritzpumpe ist in Fig. 1 eine Verteilereinspritzpumpe dargestellt mit einem Pumpenkolben 1, der durch nicht dargestellte Mittel eine hin- und hergehende und gleichzeitig rotierende Bewegung ausführt. Der Pumpenkolben 1 arbeitet in einer Bohrung 2 eines Pumpengehäuses 3 und begrenzt dort mit der Bohrung 2 und einem Gehäusekopf 4 einen Pumpenarbeitsraum 5.

Im Pumpenkolben 1 ist eine zentrale Saugbohrung 6 vorhanden, die spätestens im unteren Totpunkt des Pumpenkolbens 1 zu einem Pumpensaugraum 7 im Gehäuse 3 aufgesteuert wird, so daß der Pumpenarbeitsraum 5 aus dem Pumpensaugraum 7 mit Kraftstoff aufgefüllt werden kann. Der Pumpensaugraum 7 wird durch eine nicht dargestellte Förderpumpe mit Kraftstoff niederen Drucks versorgt. Die Steuerung der Saugbohrung 6 zum Saugraum 7 hin ist nicht dargestellt.

Im Gehäuse 3 sind entsprechend der Zahl der Zylinder der zu versorgenden Brennkraftmaschine Druckkanäle 8 vorhanden, die gleichmäßig um die Bohrung 2 herum verteilt sind und von denen nur einer in der Zeichnung dargestellt ist. Von diesen Druckkanälen 8 führen nicht dargestellte Druckleitungen zu den einzelnen Brennkraftzylindern. In der Mantelfäche des Pumpenkolbens 1 ist eine Verteilerlängsnut 9 angeordnet, die während des Druckhubs und des Weiterrotierens jeweils einen der Druckkanäle 8 mit dem Pumpenarbeitsraum 5 verbindet, wohingegen des Saughubs des Pumpenkolbens 1 diese Druckkanäle von der Verteilerlängsnut 9 getrennt sind.

Der Pumpenarbeitsraum 5 wird also vor Beginn jedes Druckhubes vollständig mit Kraftstoff aufgefüllt und legt bei seinem Druckhub stets den gleichen Gesamthub zurück, so daß die aus dem Pumpenarbeitsraum 5 verdrängte Kraftstoffmenge bei jedem Hub exakt die gleiche ist.

Im Gehäusekopf 4 sind zwei Magnetventile 11 und 12 angeordnet, von denen das Magnetventil 11 als erstes Auf/Zu-Steuerventil einen ersten Entlastungskanal 13 des Pumpenarbeitsraums 5 steuert und das Magnetventil 12 als zweites Auf/Zu-Steuerventil einen zweiten Entlastungskanal 14 steuert. Beide Entlastunsksanäle 13 und 14 sind zu einem Kanal 15 zusammengeschlossen, der in den Saugraum 7 mündet. Wenn während des Druckhubs des Pumpenkolbens 1 mindestens eines der Magnetventile 11 oder 12 öffnet, strömt aus dem Pumpenarbeitsraum 5 Kraftstoff zum Saugraum 7, so daß die über die Verteilerlängsnut 9 und den Kanal 8 zum Motor geförderte Kraftstoffmenge entsprechend verringert wird. Das Magnetventil 11 bestimmt durch seine Öffnungszeit Spritzanfang und Spritzende, indem es für den Spritzanfang nach Beginn des Druckhubs des Pumpenkolbens 1 schließt und für das Förderende nach Einspritzen einer bestimmten Kraftstoffmenge wieder öffnet. Diese Menge ist durch das in dieser Figur nicht dargestellte elektronische Steuergerät, das die Magnetventile 11 und 12 ansteuert, in einfacher Weise bestimmbar, nämlich aus der tatsächlichen Öffnungszeit in Verbindung mit dem stets gleichen Fördervolumen des Pumpenkolbens 1. In dieser vereinfachten Darstellung ist auf die Beschreibung sonst üblicher das späteste Förderende bestimmende Sicherheitsabsteuerungen und dergleichen verzichtet worden. Natürlich kann erfindungsgemäß statt diesem Magnetventil 11 auch ein anderes, die Einspritzmenge steuerndes Organ dienen, wie beispielsweise der bei Verteilerpumpen übliche auf dem Pumpenkolbenschieber angeordnete Ringschieber.

Im zweiten Entlastungskanal 14 ist eine Steuerdrossel 16 konstanten Querschnitts, nachfolgend kurz Drossel genannt, angeordnet, so daß die durch das Magnetventil gesteuerte Kraftstoffmenge stets diese Drossel 16 durchströmen muß. Diese vom Magnetventil 12 gesteuerte in der Beschreibungseinleitung Störmenge genannte Kraftstoffmenge ist im folgenden mit Steuermenge bezeichnet, da durch diesen Steuervorgang des Magnetventils 12 die zum Pumpenkolben 1 Pro Zeiteinheit zur Brennkraftmaschine geförderte Menge entweder verringert oder gar unterbrochen wird, also einen steuernden Einfluß auf das Einspritzgesetz hat, wobei in jedem Fall aber durch die Schließdauer des Magentventils 11 diese Steuermenge durch eine entsprechende zur Brennkraftmaschine geförderte Menge kompensiert werden muß, um die gewünschte Motordrehzahl aufrecht erhalten zu können. Über das kontinuierliche Abfließenlassen einer Teilmenge durch den zweiten Entlastungskanal 14 wird somit eine Spritzdauerverlängerung erreicht, die insbesondere zu einem leiseren Lauf der Brennkraftmaschine führt und durch eine nach Einspritzbeginn durch Aufsteuern des zweiten Entlastungskanals bewirkte Unterbrechung der Einspritzung kann eine sogenannte "Voreinspritzung" erzielt werden, wie sie bei manchen Direkteinspritzmotoren zur Zündverbesserung gewünscht ist.

Der durch die Drossel 16 bewirkte Druckabfall im zweiten Entlastungskanal 14 wird durch einen Differenzdruckmesser 17, nachfolgend kurz Druckmesser genannt, festgestellt, welcher mit einem von der Rückstellkraft einer Feder belasteten Meßkolben 18 arbeitet, wobei dessen Weg einer entsprechenden Druckdifferenz zwischen dem Druck im Pumpenarbeitsraum 5 und dem Druck im Saugraum 7 entspricht. Die die Drossel 16 bei geöffnetem Magnetventil 12 durchströmende Kraftstoffmenge hängt vom Drosselquerschnitt sowie der Druckdifferenz ab, so daß aufgrund dieser Funktion die Kraftstoffmenge, die die Drossel 16 pro Zeiteinheit durchströmt, dem Differenzdruck entspricht. Das elektronische Steuergerät 19, das durch entsprechende Leitungen 21 mit den Magnetventilen 11 und 12 sowie den Druckmesser 17 verbunden ist, nimmt die Kenngrößen, wie die Motordrehzahl, die auch der Pumpenkolbengeschwindigkeit (Verdrängung pro Zeiteinheit) entspricht, sowie den Differenzdruck an der Drossel 16 auf und errechnet die Steuermenge, um damit die Steuerzeiten des Magnetventils 11 zu errechnen. Das Programm des elektronischen Steuergeräts 19 enthält natürlich die für eine Drehzahlregelung erforderliche Funktion zwischen Motordrehzahl, Last und Einspritzmenge, wobei die Last meist durch die Stellung des Gaspedales bestimmt wird. Außerdem wird die Temperatur der Brennkraftmaschine mit eingegeben. Die entsprechenden Anschlußleitungen am elektronischen Steuergerät 19 sind entsprechend mit n (Drehzahl), T (Temperatur)und L (Last) bezeichnet.

In Fig. 2 ist eine Variante dieses Ausführungsbeispiels dargestellt, die speziell für die Anwendung der Erfindung durch Spritzdauerverlängerung bestimmt ist. Bei dieser Variante ist der Druckmesser 117 stromab des Magnetventils 112 angeordnet und in dessen Gehäuse integriert. Der Druckmesser 117 arbeitet hier mit einer Membran 22 als Druckgeber, die durch eine Feder 23 belastet ist und der gegenüber ein Magnetkern 24 zur Abstandsmessung Membran – Magnetkern angeordnet ist. In der Membran 22 ist die konstante Drossel 116, wobei der Ausschlag der Membran 22 durch das Druckgefälle des Druckes stromauf und stromab dieser Membran bestimmt wird. Das Druckgefälle hängt vom Drosselquerschnitt und von der durchstömenden Menge ab. Diese Menge kann im Maximalfall die Fördermenge des Pumpenkolbens 1 sein. In einem solchen Falle wäre allerdings die Einspritzung unterbrochen. Um dieses zu vermeiden – es soll ja eine Spritzdauerverlängerung und keine Unterbrechung erzielt werden – ist das Magnetventil 112 stromauf dieser Drossel 116 angeordnet und bewirkt in seinem Durchgang 25 in Verbindung mit dem Ventilquerschnitt 26 und der Schließfeder 27 einen Drosseleffekt, der zu dem gewünschten Drehzahlbereich – meist Leerlauf – nur eine so geringe Menge abströmen läßt, daß die im übrigen eingespritzte Fördermenge des Pumpenkolbens 1 die gewünschte Drehzahl aufrecht erhalten läßt. Diese Drosselwirkung läßt sich problemlos einstellen. Die differenzdruckabhängige Mengenmessung hingegen arbeitet davon unabhängig. Kritisch sind dann nur sehr geringe Drehzahlen, da der Drosseleffekt am Magentventil 112 immer noch so groß sein muß, daß im Pumpenarneitsraum 5 der zur Aufsterung des Einspritzventils notwendige Druck entstehen kann. Bei hohen Drehzahlen hingegen wirkt sich der Leiselaufeffekt kaum aus, da aufgrund der nun sehr großen Drosselwirkung in der relativ kurzen zur Verfügung stehenden Zeit auch nur sehr geringe Mengen abströmen können. Natürlich kann, um den Drosseleffekt des Zweitmagnetventils zu ändern, dieses mit einer änderbaren magnetischen Schließkraft versehen sein. Durch einen solchen Steuereffekt ist die Mengenmeßfunktion dieser abströmenden Steuermenge bei dieser Variante unbelastet, was für die tatsächliche Drehzahlregelung durch Einhaltung der insgesamt pro Zyklus einzuspritzenden Kraftstoffmenge von großer Wichtigkeit ist. Das elektronische Steuergerät regelt somit die Drezahl durch Änderung des Öffnungszeitpunktes des Magnetventils 11, wobei durch diese Verschiebung eine Kraftstoffmenge eingespritzt wird, die der durch das Magnetventil 112 rückströmenden Steuermenge entspricht und die durch den Druckmesser 117 gemessen wurde. Wenn nun durch Eingriff am Magnetventil 112 der Drosseleffekt desselben geändert wird, wirkt sich dieses auf die Regelfunktion im übrigen nicht aus, da als Regelgröße die erforderliche Einspritzmenge dient, die zum Teil aus der Steuermenge bestimmt wird, die die Drossel 116 durchströmt.

Bei dieser Variante ist das Magnetventil 112 durch die Schließfeder 27 belastet, stromlos geschlossen, würde jedoch bei bereits niederen Drücken und Ausfallen des Stromnetzes öffnen, so daß ein Durchdrehen des Motors durch fortgesetztes Einspritzen nicht möglich wäre. Der Magnet 28 dieses Magnetventils unterstützt je nach Erregungsstärke diese Kraft, so daß er nach Abschalten des Magneten 28 das Magentventil 112 aufgrund des Kraftstoffhochdruckes öffnen würde.

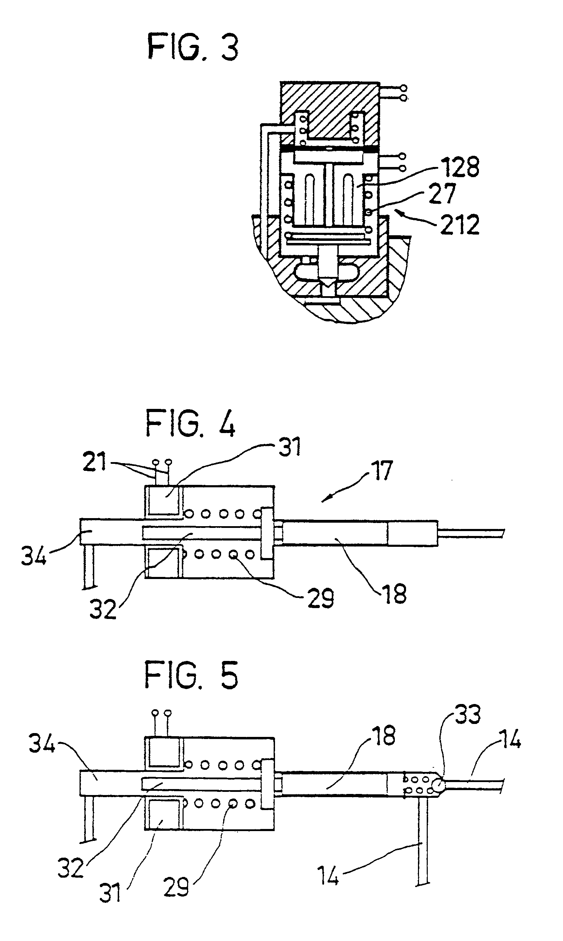

Bei der Variante in Fig. 3, die grundsätzlich so wie die in Fig. 2 aufgebaut ist, ist nur die Wirkung des Magneten 128 umgekehrt. Auch bei dieser Variante bewirkt die Schließfeder 27 ein stromloses Schließen des Magnetventils 112. Bei Einschalten des Magneten 128 wird die Kraft der Schließfeder 27 entsprechend der Magnetkraft verringert oder gar aufgehoben. Dieser Aufbau entspricht dem üblichen Magnetventil, bei dessen Steuerung die Schließfederkraft entgegen der Magnetkraft wirkt.

Der in Fig. 4 im Schnitt gezeigte Druckmesser 17 entspricht dem Druckmesser, wie der in Fig. 1 in der Außenansicht dargestellt ist. Der Meßkolben 18 ist durch eine Meßfeder 29 belastet und weist einen in eine Meßspule 31 ragenden Anker 32 auf. Die Lage des Meßkolbens 18 und des Ankers 32 kann somit durch die Meßspule 31, die als Weggeber dient, festgehalten und dem elektronischen Steuergerät über die elektrischen Anschlußleitungen weitergegeben werden. Die Querschnittsfläche des Meßkolbens 18 und die Kraft und Kennlinie der Meßfeder 29 sind maßgebend für die druckabhängige Verstellung des Ankers 32. Da das Mengendurchflußgesetzt an einer Drossel bestimmten Querschnitts einer quadratischen Funktion folgt, kann somit bei entsprechender quadratischer Kennlinie der Meßfeder 29 erzielt werden, daß Druckänderungen, nämlich bei Abfließenlassen der Steuermenge durch die Drossel 16 (Figur 1) der Verstellweg 32 des Ankers unmittelbar der abströmenden Menge entspricht, so daß durch die Meßgröße des Weges des Ankers 32 unmittelbar ein Meßwert für die abströmende Menge zur Verfügung steht. In Figur 5 ist eine Variante des in Figur 2 dargestellten Druckmessers 117 gezeigt. Auch hier ist der Druckmesser bzw. Mengenmesser vom Kraftstoff durchspült, indem er in den zweiten Entlastungskanal 14 eingesetzt ist. Ein Rückschlagventil 33 dient nur zur Abkopplung. Im übrigen ist mit einem Meßkolben 18, der Meßfeder 29, der Meßspule 31 und dem Anker 32 dieser Druckmesser genauso wie der in Figur 4 aufgebaut. Der den Anker 32 aufnehmende Raum 34 ist bei beiden Ausgestaltungen zum Saugraum 7 druckentlastet. Hier sind verschiedene Ausgestaltungen möglich, wobei als Weggeber insbesondere solche Druck/Wegwandler zum Einsatz kommen, bei denen die an sich quadratische Funktion zwischen Druckdifferenz und Kraftstoffmenge einer Kolbenweg/Federkraft entspricht. Bei einem solchen mit einer quadratischen Funktion arbeitenden Differenzdruckmesser, bei dem ein druckbeaufschlagter Kolben gegen eine Feder arbeitet und mit einem eine konstante Drossel enthaltenden Entlastungskanal eliminieren sich die quadratischen Glieder der Druck und Menge verbindenden Funktion, so daß ein zugeordneter Weggeber des Differenzdruckmessers einen der Rücklaufmenge linear proportionalen Meßwert an das elektronische Steuergerät eingeben kann.

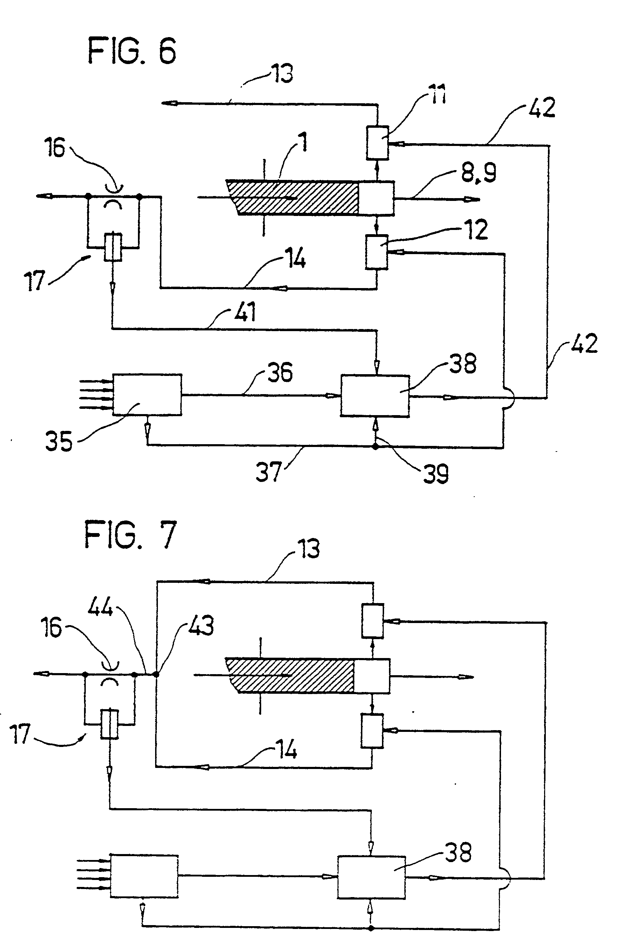

Der Schaltplan in Figur 6 entpsicht grundsätzlich der in Figur 1 dargestellten Einspritzanlage.

Das elektronische Steuergerät ist in diesem Schaltplan in zwei Blocks dargestellt, nämlich dem eigentlichen Reglerblock 35, in dessen Rechner die einzelnen Motorkenngrößen wie Drehzahl, Last usw. in einem Programm verarbeitet werden, wobei über einen Ausgang 36 das den Spritzbeginn und das Spritzende bestimmende Magnetventil 11 angesteuert wird und über einen Ausgang 37 das zweite Magnetventil 12 durch das die Absteuermenge bestimmbar ist. Erfindungsgemäß muß dabei das durch das Magnetventil 11 bestimmte Spritzende soweit auf später verschoben werden bis die durch das Magnetventil 12 abgesteuerte "Störmenge" ersetzt wurde. Die Gesamtdauer der Einspritzung einschließlich verspätetem Spritzende muß jedoch stets während des Druckhubs des Pumpenkolbens 1 möglich sein.

Um den Zeitabschnitt zu ermitteln, um den das Magnetventil 11 später zur Beendigung der Kraftstoffeinspritzung öffnet als dies der Fall sein würde, wenn durch das Magnetventil 12 keine Kraftstoffmenge zurückströmen würde, ist dem Reglerblock 35 ein Differenzmengenbaustein 38 nachgeschaltet, zu dem der Anschluß 36 geführt ist und in den die Steuersignale aus dem Anschluß 37 über einen Anschluß 39 eingegeben werden und in dem vor allem die Meßwerte aus dem aus Drossel 16 und Druckmesser 17 ermittelten Absteuermengen verarbeitet werden, indem diese über eine Leitung 41 dem Differenzmengenbaustein 38 zugeführt werden. Von diesem Baustein führt dann eine Steuerleitung 42 zum ersten Magnetventil 11. Wenn nun aufgrund einer Forderung des Programms im Reglerblock 35 die Aufsteuerzeit des Magnetventils 12 ändert und damit auch die Absteuermenge, die über den zweiten Entlastungskanal 14 und vor allem die Drossel 16 strömt, wird über den Druckmesser 17 aufgrund der oben genannten Vorgänge ein Wert ermittelt, der der Rückströmmenge entspricht und der über die Leitung 41 den Differenzmengenbaustein 38 eingegeben wird. Dieser wiederum bewirkt aufgrund des ihm eingegebenen Programms und in Kenntnis – über den Anschluß 39 – der Steuerzeitänderung des Magnetventils 12 eine entsprechende Änderung des Aussteuerzeitpunkts des Magnetventils 11.

Hierbei wird die Differenzmenge vorberechnet aus Pumpenfördermenge abzüglich Rücklaufmenge, wobei die gemessene Rücklaufmenge eingegeben und mit der konstanten bestimmten Pumpenfördermenge verglichen wird. Durch Integrierung ergibt sich aus der Pumpenfördermenge abzüglich der Rücklaufmenge die tatsächliche Einspritzmenge. Parallel dazu wird zeitlich Spritzanfang und Spitzende für eine erforderliche Einspritzmenge vom elektronischen Steuergerät errechnet und nach Differenzierung dem ersten Auf/Zu-Steuerventil bzw. dem zweiten Auf/Zu-Steuergliedventil eingegeben. So ist es auf einfache Weise erreichbar, daß bei Zuschalten der Steuerdrossel die dadurch gegebene zusätzliche Rücklaufmenge in Form der Öffnungzeit des erten Auf/Zu-Schalteventils kompensiert wird, so daß die Soll-Einspritzmenge tatsächlich eingespritzt wird.

In Fig. 7 ist ein zweiter Schaltplan dargestellt, bei dem ebenfalls ein Differenzmengebaustein 38 in gleicher Funktion wie bei der vorherigen Variante dargestellt ist. Im Unterschied jedoch, auch zu allem vorher Beschriebenen, sind die beiden Entlastungskanäle 13 und 14 bei 43 miteinander verbunden, bevor die rückströmenden Kraftstoffmengen dann über einen gemeinsamen Kanal 44 abgeleitet werden, indem die Drossel 16 sowie der Druckmesser 17 angeordnet ist. Die tatsächliche effektive Einspritzmenge ergibt sich aus dem Gesamtfördervolumen der Einspritzpumpe abzüglich der "Störmenge" und abzüglich der das erste Auf/Zu-Steuerventil durchströmenden Menge. Durch diese zusätzliche Mengenmessung ist eine Verfeinerung der Regelung erzielbar, wobei der erste und der zweite Entlastungskanal stromab der Ventile und stromauf der Mengenmeßstelle miteinander verbunden sein können, da die Rücklaufmenge jeweils nur aus dem ersten oder zweiten Entlastungskanal kommt. Wie bei der in Figur 6 dargestellten Variante kann auch hier der Differenzmengenbaustein 38 abgeschaltet werden, so daß die Drehzahl der Brennkraftmaschine nur über den Reglerblock 35 des elektronischen Steuergeräts geregelt wird.

**Ansprüche**

1. Kraftstoffeinspritzanlage für Brennkraftmaschinen mit einer eine bestimmte Kraftstoffmenge pro Pumpzyklus aus einem Pumpenarbeitsraum (5) fördernden Hochdruckpumpe, mit einem in einem ersten Entlastungskanal (13) angeordneten, eine erste Rücklaufmenge steuernden, insbesonder Förderanfang und Förderende der Kraftstoffeinspritzung bestimmenden, ersten Auf/Zu-Steuerventil (11), mit einem eine Steuerdrossel (16) mit konstantem Querschnitt und ein in Reihe dazu liegendes elektrisch gesteuertes, zweites Auf/Zu-Steuerventil (12) enthaltenden zweiten Entlastungskanal (14) für eine zweite Rücklaufmenge und mit einem elektronischen Steuergerät (35, 38), in dem Kenngrößen der Brennkraftmaschine und der Einspritzpumpe zu das Einspritzgesetz beeinflussenden Größen verarbeitet werden, dadurch gekennzeichnet, daß im zweiten Entlastungskanal (14) zur Mengenmessung ein Differenzdruckmengenmesser (17) vorgesehen ist, der ein gegen eine Rückstellkraft nachgiebiges Glied (18, 22, 32) aufweist, das einerseits vom pumpenarbeitsraumseitigen Druck stromaufwärts der Steuerdrossel (16) entgegen der Rückstellkraft und anderseitig vom entlastungsseitigen Druck stromabwärts der Steuerdrossel (16) beaufschlagt ist und dessen Auslenkung mittels eines Weggebers (31) als Kennwert des Differenzdruckmessers erfaßt wird und daß im elektronischen Steuergerät (19, 35, 38) außer den Kennwerten des Differenzdruckmessers (16, 17) und des zweiten Auf/Zu-Steuerventils (12, 112, 212) die Menge des über den zweiten Entlastungskanal (14) abfließenden Kraftstoffs als ein Steuerwert ermittelt und entsprechend diesem Steuerwert die Steuerzeit des ersten Steuerventils (11) geändert wird.

2. Kraftstoffeinspritzanlage nach Anspruch 1, dadurch gekennzeichnet, daß die Steuerdrossel (16, 116) dem zweiten Auf/Zu-Steurventil (12, 112, 212) entlastungsseitig nachgeordnet ist und der Ventildurchgang (25) des zweiten Auf/Zu-Steuerventils einen Ventilquerschnitt (26) aufweist, der als ein die konstante Drossel (16) ankoppelnde Vordrossel wirkt.

3. Kraftstoffeinspritzanlage nach Anspruch 1 oder 2, dadurch gekennzeichnet, daß das elektronische Steuergerät (19) einen Differenzmengenbaustein (38) zur Berechnung der Differenzmenge aus Pumpenfördermenge abzüglich Absteuermenge (Störmenge) aufweist, und daß mit dem Rechenergebnis des Differenzmengenbausteins (38) die Schließzeit und damit die Spritzdauer des ersten Auf/Zu-Steuerventils (11) entsprechend änderbar ist.

4. Kraftstoffeinspritzanlage nach einem der vorhergehenden Ansprüche, dadurch gekennzeichnet, daß auch die das erste Auf/Zu-Steuerventil (11) durchströmende Kraftstoffmenge gemessen und der Meßwert dem elektronischen Steuergerät (19) eingegeben wird.

5. Kraftstoffeinspritzanlage nach Anspruch 4, dadurch gekennzeichnet, daß die Rückströmmengen aus beiden Entlastungskanälen (13, 14) mit dem Differenzdruck (16, 17) gemessen werden, indem beide Entlastungskanäle stromauf der Mengemessung vereinigt werden.

6. Kraftstoffeinspritzanlage nach einem der vorhergehenden Ansprüche, dadurch gekennzeichnet, daß der Differenzdruckmesser mit einem mengenanalog arbeitenden Weggeber (24, 31) versehen ist.

7. Kraftstoffeinspritzanlage nach Anspruch 6, dadurch gekennzeichnet, daß die Drossel (116) in dem nachgiebigen Glied (22) angeordnet ist.

## Revendications

1. Installation d'injection de carburant pour moteurs à combustion interne, comprenant une pompe à haute pression refoulant une quantité déterminée de carburant par cycle de pompage depuis une chambre de travail de pompe (5), une première soupape de commande d'ouverture/fermeture (11), disposée sur un premier canal de décharge (13), qui commande une première quantité refluée et détermine en particulier le début du refoulement et la fin du refoulement de l'injection de carburant, puis un étranglement de commande (16) pourvu d'une section constante et un deuxième canal de décharge (14) pour une deuxième quantité refluée, qui contient une deuxième soupape de commande d'ouverture/fermeture montée en série et commandée électriquement et, en outre, un appareil de commande (35, 38) électronique, dans lequel sont traités les paramètres du moteur à combustion interne en grandeurs influençant la loi de l'injection, caractérisée en ce qu'il est prévu pour la mesure de quantité dans le deuxième canal de décharge (14) un indicateur de débit à pression différentielle (17), qui présente un élément (18, 22, 23) flexible sous l'effet d'une force de rappel, qui est sollicité d'une part par la pression du côté de la chambre de travail de la pompe en amont de l'étranglement de commande (16) en sens contraire de la force de rappel et d'autre part par la pression du côté décharge en aval de l'étranglement de commande, et dont la variation est enregistrée au moyen d'un transmetteur de course (31) comme valeur caractéristique de l'indicateur de pression différentiel et en ce que, en dehors des paramètres de l'indicateur de pression différentiel (16, 17) et de la deuxième soupape de commande d'ouverture/fermeture (12, 112, 212), la quantité de carburant s'écoulant par le deuxième canal de décharge (14) est déterminé comme une valeur de commande et le temps de commande de la première soupape de commande (11) est modifié en fonction de cette valeur de commande.

2. Installation d'injection de carburant selon la revendication 1, caractérisée en ce que l'étranglement de commande (16, 116) est subordonné du côté décharge à la deuxième soupape de commande d'ouverture/fermeture et en ce que l'orifice (25) de la deuxième soupape de commande d'ouverture/fermeture présente une section qui joue un rôle d'étranglement primaire accouplant l'étranglement (16) constant.

3. Installation d'injection de carburant selon la revendication 1 ou 2, caractérisée en ce que l'appareil de commande (19) électronique présente un composant de quantité différentiel pour le calcul de la quantité différentielle à partir de la quantité différentielle, déduction faite de la quantité contrôlée (quantité perturbatrice) et en ce que le temps de fermeture et, par suite, la durée d'injection de la première soupape de commande d'ouverture/fermeture (11) sont modifiables en fonction du résultat du calcul du composant de quantité différentiel (38).

4. Installation d'injection de carburant selon l'une des revendications qui précédent, caractérisée en ce que la quantité de carburant s'écoulant par la première soupape de commande d'ouverture/fermeture (11) est aussi mesurée et en ce que la valeur mesurée est introduite dans l'appareil de commande électronique (19).

5. Installation d'injection de carburant selon la revendication 4, caractérisée en ce que les quantités refluant des deux canaux de décharge (13, 14) sont mesurées avec la pression différentielle (16, 17), les deux canaux de décharge étant réunis en amont de la mesure de quantité.

6. Installation d'injection de carburant selon l'une des revendications qui précédent, caractérisée en ce que l'indicateur de pression différentiel est pourvu d'un transmetteur de course (24, 31) opérant par analogie avec la quantité.

7. Installation d'injection de carburant selon la revendication 6, caractérisée en ce que l'étranglement (116) est disposé dans l'élément flexible (22).

## Claims

1. Fuel injection system for internal combustion engines with a high-pressure pump conveying a certain quantity of fuel from a pump working space (5) per pumping cycle, with a first open/shut control valve (11) arranged in a first relief channel (13), controlling a first return quantity, in particular determining the start of delivery and end of delivery of fuel injection, with a second relief channel (14) for a second return quantity, containing a control restrictor (16) of constant cross-section and an electrically controlled second open/shut control valve (12) positioned in series with the latter, and with an electronic control device (35, 38) in which characteristic quantities of the internal combustion engine and of the injection pump are processed to provide quantities influencing the injection law, characterised in that provided in the second relief channel (14), for the purpose of quantity measurement, is a differential pressure/quantity-measuring device (17) which has a member (18, 22, 32) which yields counter to a restoring force and, on the one hand, is stressed counter to the restoring force by the pressure on the pump working-space side upstream of the control restrictor (16) and, on the other hand, by the relief-side pressure downstream of the control restrictor (16) and the deflection of which is detected by means of a displacement sensor (31) as characteristic value of the differential pressure-measuring device, and in that, apart from the characteristic values of the differential pressure-measuring device (16, 17) and of the second open/shut control valve (12, 112, 212), the quantity of fuel flowing off via the second relief channel (14) is determined in the electronic control device (19, 35, 38) as a control value and the control time of the first control valve (11) altered in accordance with this control value.

2. Fuel injection system according to Claim 1, characterised in that the control restrictor (16, 116) is arranged downstream of the second open/shut control valve (12, 112, 212), on the relief side, and the valve passage (25) of the second open/shut control valve has a valve cross-section (26) which acts as an upstream restrictor coupling the constant restrictor (16).

3. Fuel injection system according to Claim 1 or 2, characterised in that the electronic control device (19) has a differential quantity component (38) for calculating the differential quantity resulting from the pump delivery quantity minus the discharge quantity (disturbing quantity), and in that the closing time and hence the duration of injection of the first open/shut control valve (11) can be correspondingly altered using the result of the calculation of the differential quantity component (38).

4. Fuel injection system according to one of the preceding claims, characterised in that the quantity of fuel flowing through the first open/shut control valve (11) is also measured and the measured value input into the electronic control device (19).

5. Fuel injection system according to Claim 4, characterised in that the return quantities from the two relief channels (13, 14) are measured with the differential pressure (16, 17) by the two relief channels being combined upstream of the quantity measurement.

6. Fuel injection system according to one of the preceding claims, characterised in that the differential pressure-measuring device is provided with a displacement sensor (24, 31) operating in quantity-analogous fashion.

7. Fuel injection system according to Claim 6, characterised in that the restrictor (116) is arranged in the yielding member (22).

**FIG. 1**

**FIG. 2**

## FIG. 3

## FIG. 4

## FIG. 5

# FIG. 6

# FIG. 7